# EUROPEAN PATENT APPLICATION

(11) **EP 4 198 784 A1**
(43) Date of publication of application: **21.06.2023**
(21) Application number: 21216123.6
(22) Date of filing: 20.12.2021
(51) Int. Cl.: G06F 21/62

(54) **METHOD FOR GENERATING AN OUTPUT IN RESPONSE TO A QUERY ON A DATABASE CONTAINING DATA PERTAINING TO A PLURALITY OF PRIVACY PRINCIPLES**

(71) Applicant: Bayerische Motoren Werke Aktiengesellschaft, 80809 München (DE)
(72) Inventor: Munilla Garrido, Gonzalo, 80809 Munich (DE)

(57) **Abstract**

The present invention relates to a method for generating an output in response to a query on a database containing data pertaining to a plurality of privacy principles, wherein the method (10) comprises the steps of:
- generating at least one data quantity based on the data contained in the database using a randomized response algorithm (2,11); and
- generating the output based on the at least one data quantity using a differential privacy algorithm that is based on a quality function (3,12).

## Description

The present application relates to a method for generating an output in response to a query on a database containing data pertaining to a plurality of privacy principles, wherein a privacy selection with improved intimacy can be achieved, and wherein the generated output has an improved accuracy.

Nowadays, the amount of information collected in an environment is growing. For example, vehicle manufactures collect data gathered respectively acquired during a journey with a vehicle, in order to be able to develop improved advanced driver assistance systems based on the gathered data. For example, if the vehicle manufacturer likes to improve the behaviour of an advanced driver assistance system in a particular driving situation, he can formulate a query on a database to receive data elements from the database that are indicative of this particular driving situation.

As the amount of information collected in an environment grows, individuals are increasingly protective of providing various forms of information. Therefore, there is a need to anonymize a corresponding dataset so that the elements of the dataset may be studied without re-identifying someone in the dataset.

Differential privacy has become an important consideration for entities that aggregate information. Differential privacy is a system for publicly sharing information about a dataset by describing the patterns of groups within the dataset while withholding information about individuals in the dataset. The idea behind differential privacy is that if the effect of making an arbitrary single substitution in the database is small enough, the results of a query on the database cannot be used to infer much about any single individual, and therefore provides privacy.

One approach to provide such a differential privacy is to use a randomized response algorithm. Randomized response is a technique used to collect sensitive information from individuals in such a way that survey interviewers and those who process the data do not know which of two alternative questions the respondent has answered, respectively whether the respondent answers the truth or a random or preset answer. A randomized response algorithm provides the advantage of being a client-based privacy solution, and accordingly, does not require reliance upon a trusted third-party server. However, since randomised response procedures work by adding random noise to the data, they all suffer from larger standard errors, leading to reduced power which makes it necessary to use comparatively large samples to generate a dataset with sufficient accuracy in response to a query on a database.

Other differential privacy mechanisms are based on quality functions, wherein the quality function is designed to allow selecting the best element, respectively the element that has the highest utility among all elements, from the database while, at the same time, preserving differential privacy. In particular, a differential privacy mechanism that is based on a quality function outputs from a finite set the item that approximately maximizes a data-dependent quality function.

Further, there are private data publishing mechanisms that are usually comparatively complex. For example, k-anonymity is an NP-hard problem and several trials can be necessary until the desired privacy in a dataset is achieved.

Therefore, there is a need for an improved method for generating an output in response to a query on a database containing data pertaining to a plurality of privacy principles.

The document US 2019/0087604 discloses a method for data anonymity in a computing environment by a processor, comprising transforming a dataset into an anonymous dataset by applying a differential privacy operation and a clustering operation to the dataset.

It is an object of the present invention to provide an improved method for generating an output in response to a query on a database containing data pertaining to a plurality of privacy principles.

According to one embodiment of the invention, this object is solved by a method for generating an output in response to a query on a database containing data pertaining to a plurality of privacy principles, wherein first at least one data quantity is generated based on the data contained in the database using a randomized response algorithm, and wherein the output is thereafter generated based on the at least one first data quantity using a differential privacy algorithm that is based on a quality function.

Therein, a database is an organized collection of data stored and accessed electronically from a computer system.

Further, privacy principles are the underlying doctrine and rules that should be followed in handling personal information.

Therein, by first processing respectively pre-processing the elements of the database respectively the data contained in the database using a randomized response algorithm to generate at least one data quantity, wherein only the at least one data quantity is thereafter processed using a differential privacy algorithm that is based on a quality function, the computing resources that are required for applying the differential privacy mechanism based on a quality function can be significantly reduced compared for example to algorithms such as k-anonymity, wherein significantly fewer trials are required in order to achieve the desired result, so that the method can also be carried out on control units with comparatively few computing resources.

Further, by utilizing a randomized response algorithm and a differential privacy mechanism based on a quality function, the utility respectively the accuracy of the generated output can be improved compared to only using a randomized response algorithm, wherein, at the same time, also the privacy principles can be preserved. In particular, a privacy selection with improved intimacy can be achieved, wherein the generated output has an improved accuracy.

Thus, an improved method for generating an output in response to a query on a database containing data pertaining to a plurality of privacy principles is provided.

Therein, the output can for example be a single value generated in response to the query and relating to an attribute respectively characteristic of the database, or a dataset.

Further, the quality function can be based on at least one characteristic of the at least one data quantity.

Here, a characteristic is a feature that helps to identify respectively to describe recognizably the at least one data quantity. For example, the characteristic can be the amount of respectively the number of elements in the at least one data quantity.

By basing the quality function on at least one characteristic of the at least one distribution respectively the results of the randomized response algorithm, the results of the randomized response algorithm are directly taken into account when applying the differential privacy mechanism based on the quality function, whereby the trials of the differential privacy mechanism based on the quality function that are required in order to achieve the desired result and, in particular, the desired privacy can be further reduced.

Further, the differential privacy mechanism based on the quality function can be an exponential mechanism.

The exponential mechanism is a mechanism that allows selecting the best element from a set while preserving differential privacy. Therein, the analyst defines which element is the best by specifying a scoring function that outputs a score for each element in the set, and also defines the set of things to pick from. The mechanism provides differential privacy by approximately maximizing the score of the element it returns using an exponential function, wherein, to satisfy differential privacy, the exponential mechanism sometimes returns an element from the set which does not have the highest score.

The major advantages of the exponential mechanism are that it selects a value without noise and its bias towards the most useful values.

Further, the data contained in the database can be sensor data.

A sensor is a device, module, machine, or subsystem whose purpose is to detect events or changes in its environment and send the information to other electronics, frequently a computer processor.

Therein, the sensor data can for example be data acquired during a journey with a vehicle.

Thus, the generation of the output is based on technical features apart from the corresponding data processing system.

However, that the data contained in the database is sensor data should merely be understood as a particular embodiment, and the data contained in the database can for example also be data relating to information gathered for a wide variety of academic, business, and government purposes.

According to a further embodiment of the invention, a method for developing a function is provided, wherein an output is generated using a method for generating an output in response to a query on a database containing data pertaining to a plurality of privacy principles as described above, and wherein the function is developed based on the generated output.

Here a function is a device, a unit or a product that provides outputs in response to inputs based on a defined relation from at least a set of inputs to at least a set of possible outputs.

Thus, a method for developing a function is provided, wherein the function can be developed based on an improved output.

In particular, the function can be developed based on an output that is generated by an improved method for generating an output in response to a query on a database containing data pertaining to a plurality of privacy principles. Therein, by first processing respectively pre-processing the elements of the database respectively the data contained in the database using a randomized response algorithm to generate at least one data quantity, wherein only the at least one data quantity is thereafter processed using a differential privacy algorithm that is based on a quality function, the computing resources that are required for applying the differential privacy mechanism based on a quality function can be significantly reduced compared for example to algorithms such as k-anonymity, wherein significantly fewer trials are required in order to achieve the desired result, so that the method can also be carried out on control units with comparatively few computing resources. Further, by utilizing a randomized response algorithm and a differential privacy mechanism based on a quality function, the utility respectively the accuracy of the generated output can be improved compared to only using a randomized response algorithm, wherein, at the same time, also the privacy principles can be preserved. In particular, a privacy selection with improved intimacy can be achieved, wherein the generated output has an improved accuracy.

In one embodiment, the function is an advanced driver assistance system.

Advanced driver assistance systems are groups of electronic technologies that assist drivers of vehicles in driving and parking functions.

Therein, it is known to develop improved advanced driver assistance systems based on data relating to specific driving scenarios, acquired during journeys with vehicles, wherein, according to the present invention, an output, for example a dataset with improved accuracy is used to develop the advanced driver assistance system, and wherein, at the same time, a privacy selection with improved intimacy is achieved.

However, that the function is an advanced driver assistance system should merely be understood as a particular embodiment and the function can be any other function that can be developed based on such an output, for example a corresponding medical device, too.

According to still a further embodiment of the invention, a control unit for generating an output in response to a query on a database containing data pertaining to a plurality of privacy principles is provided, wherein the control unit comprises a first generating unit, wherein the first generating unit is configured to generate at least one data quantity based on the data contained in the database using a randomized response algorithm, and a second generating unit, wherein the second generating unit is configured to generate the output based on the at least one data quantity using a differential privacy algorithm that is based on a quality function.

Thus, an improved control unit for generating an output in response to a query on a database containing data pertaining to a plurality of privacy principles is provided. Therein, by first processing respectively pre-processing the elements of the database respectively the data contained in the database using a randomized response algorithm to generate at least one data quantity, wherein only the at least one data quantity is thereafter processed using a differential privacy algorithm that is based on a quality function, the computing resources that are required for applying the differential privacy mechanism based on a quality function can be significantly reduced compared for example to algorithms such as k-anonymity, wherein significantly fewer trials are required in order to achieve the desired result, so that the method can also be carried out on control units with comparatively few computing resources. Further, by utilizing a randomized response algorithm and a differential privacy mechanism based on a quality function, the utility respectively the accuracy of the generated output can be improved compared to only using a randomized response algorithm, wherein, at the same time, also the privacy principles can be preserved. In particular, a privacy selection with improved intimacy can be achieved, wherein the generated output has an improved accuracy.

Therein, the quality function can be based on at least one characteristic of the at least one data quantity. By basing the quality function on at least one characteristic of the at least one distribution respectively the results of the randomized response algorithm, the results of the randomized response algorithm are directly taken into account when applying the differential privacy mechanism based on the quality function, whereby the trials of the differential privacy mechanism based on the quality function that are required in order to achieve the desired result can be further reduced.

Further, the differential privacy mechanism based on the quality function can be an exponential mechanism. Therein, the major advantages of the exponential mechanism are that it selects a value without imbuing noise directly to the output and its bias towards the most useful values.

Further, the data contained in the database can be sensor data. Thus, the generation of the output is based on technical features apart from the corresponding data processing system.

Therein, the sensor data can for example be data acquired during a journey with a vehicle.

However, that the data contained in the database is sensor data should merely be understood as a particular embodiment, and the data contained in the database can for example also be data relating to information gathered for a wide variety of academic, business, and government purposes.

According to still another embodiment of the invention, a control unit for developing a function is provided, wherein the control unit comprises a receiving unit for receiving an output, wherein the output is generated using a control unit for generating an output in response to a query on a database containing data pertaining to a plurality of privacy principles as described above, and wherein the control unit further comprises a developing unit, wherein the developing unit is configured to develop a function based on the received output.

Thus, a control unit for developing a function is provided, wherein the function can be developed on an improved output.

In particular, the control unit is configured to develop the function based on an output, for example a dataset that is generated by an improved control unit for generating an output in response to a query on a database containing data pertaining to a plurality of privacy principles. By first processing respectively pre-processing the elements of the database respectively the data contained in the database using a randomized response algorithm to generate at least one data quantity, wherein only the at least one data quantity is thereafter processed using a differential privacy algorithm that is based on a quality function, the computing resources that are required for applying the differential privacy mechanism based on a quality function can be significantly reduced compared to for example algorithms such as k-anonymity, wherein significantly fewer trials are required in order to achieve the desired result, so that the method can also be carried out on control units with comparatively few computing resources. Further, by utilizing a randomized response algorithm and a differential privacy mechanism based on a quality function, the utility respectively the accuracy of the generated output can be improved compared to only using a randomized response algorithm, wherein, at the same time, also the privacy principles can be preserved. In particular, a privacy selection with improved intimacy can be achieved, wherein the generated output has an improved accuracy.

In one embodiment, the function is an advanced driver assistance system. Therein, it is known to develop improved advanced driver assistance systems based on data relating to specific driving scenarios, acquired during journeys with vehicles, wherein, according to the present invention, an output with improved accuracy is used to develop the advanced driver assistance system, wherein, at the same time, a privacy selection with improved intimacy is achieved.

However, that the function is an advanced driver assistance system should merely be understood as a particular embodiment and the function can be any other function that can be developed based on such an output, for example a medical device, too.

The invention will now be described in further detail with reference to the attached drawings.
- Fig. 1: illustrates a flowchart of a method for developing a function according to embodiments of the invention;
- Fig. 2: illustrates a method for generating an output in response to a query on a database containing data pertaining to a plurality of privacy principles;
- Fig. 3: illustrates a system for developing a function according to embodiments of the invention.

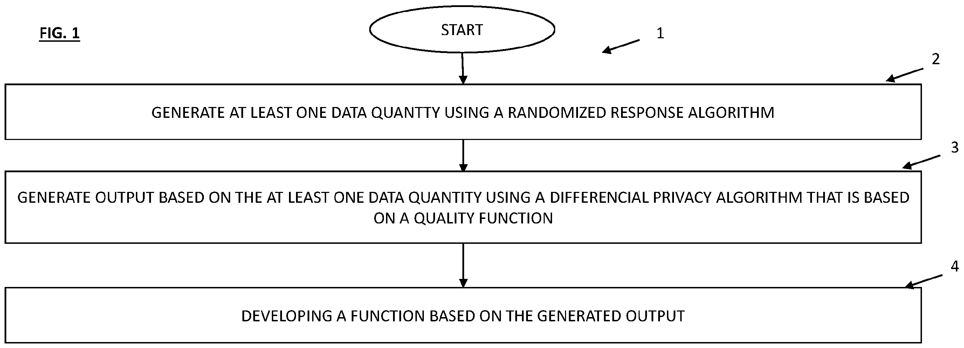

Figure 1 illustrates a flowchart of a method 1 for developing a function according to embodiments of the invention.

Differentially private selection enables analysts to retrieve the item in a dataset that approximately maximizes a data-dependent quality function. Therein, due to the formal guarantee of privacy, the analyzed individuals enjoy plausible deniability.

One approach to provide such a differential privacy is to use a randomized response algorithm. Randomized response is a technique used to collect sensitive information from individuals in such a way that survey interviewers and those who process the data do not know which of two alternative questions the respondent has answered, respectively whether the respondent answers the truth or a random or preset answer. A randomized response algorithm provides the advantage of being a client-based privacy solution, and accordingly, does not require reliance upon a trusted third-party server. However, since randomised response procedures work by adding random noise to the data, they all suffer from larger standard errors, leading to reduced power which makes it necessary to use comparatively large samples to generate a dataset with sufficient accuracy in response to a query on a database.

Other differential privacy mechanisms are based on quality functions, wherein the quality function is designed to allow selecting the best element, respectively the element that has the highest utility among all elements, from the database while, at the same time, preserving differential privacy. In particular, a differential privacy mechanism that is based on a quality function outputs from a finite set the item that approximately maximizes a data-dependent quality function.

Further, there are private data publishing mechanisms that are usually comparatively complex. In particular, k-anonymity is an NP-hard problem and several trials are usually necessary until the desired privacy in a dataset is achieved.

According to the embodiments of Fig. 1, a method 1 is provided that is based on an improved differentially private selection algorithm, respectively an exponential randomized response mechanism.

In particular, Fig. 1 shows a method 1, which comprises a step 2 of generating at least one data quantity based on the data contained in a database using a randomized response algorithm, and a step 3 of generating an output based on the at least one first data quantity using a differential privacy algorithm that is based on a quality function.

Therein, by first processing respectively pre-processing the elements of the database respectively the data contained in the database using a randomized response algorithm to generate at least one data quantity, wherein only the at least one data quantity is thereafter processed using a differential privacy algorithm that is based on a quality function, the computing resources that are required for applying the differential privacy mechanism based on a quality function can be significantly reduced compared for example to algorithms such as k-anonymity, wherein significantly fewer trials are required in order to achieve the desired result, so that the method can also be carried out on control units with comparatively few computing resources.

Further, by utilizing a randomized response algorithm and a differential privacy mechanism based on a quality function, the utility respectively the accuracy of the generated output can be improved compared to only using a randomized response algorithm, wherein, at the same time, also the privacy principles can be preserved. In particular, a privacy selection with improved intimacy can be achieved, wherein the generated output has an improved accuracy.

Thus, an improved method for generating an output in response to a query on a database containing data pertaining to a plurality of privacy principles is provided.

Therein, by the randomized response algorithm, anonymization of the entire database can be achieved. According to the embodiments of Fig. 1, the randomized response algorithm is further configured in such a way, that a uniform distribution of the elements of the database in corresponding data quantities respectively datasets can be achieved, wherein the elements of the corresponding datasets can be discrete values.

Further, the quality function is based on at least one characteristic of the at least one data quantity, wherein, according to the embodiments of Fig. 1, the at least one characteristic is the amount of, respectively the number of elements in the at least one data quantity. Therein, the quality function is a quality score function and the amount of the at least one data quantity a quality score assigned to the at least one data quantity.

Furthermore, according to the embodiments of Fig. 1, the differential privacy mechanism based on the quality function is an exponential mechanism. Therein, utility respectively accuracy improvements can be achieved compared to simply using an exponential mechanism if the quality score of the most optimal candidate is above the rest by a defined amount.

According to the embodiments of Fig. 1, the data contained in the database relates to data acquired in specific driving situations during journeys with vehicles.

Fig. 1 further shows a step 4 of developing a function based on the generated output.

In particular, as the generated output has an improved accuracy, wherein, at the same time, a privacy selection with improved intimacy is achieved, an improved function respectively product can be achieved based on the analysis of the data contained in the generated output.

Therein, according to the embodiments of Fig. 1, the function is an advanced driver assistance system.

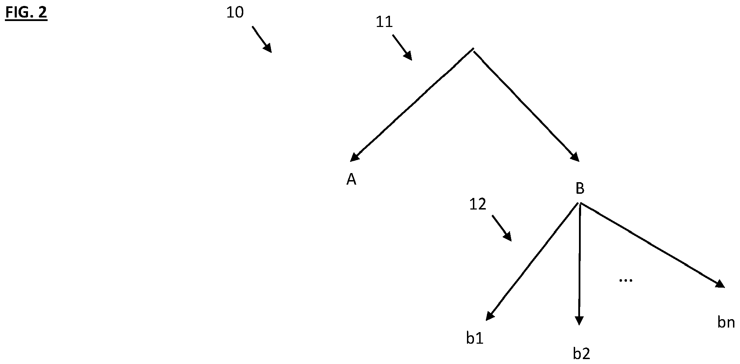

Fig. 2 illustrates a method 10 for generating an output in response to a query on a database containing data pertaining to a plurality of privacy principles according to a first embodiment of the invention.

In particular, Fig. 2 illustrates a decision tree showing the method 10 for generating an output in response to a query on a database containing data pertaining to a plurality of privacy principles according to the first embodiment of the invention.

As shown in Fig. 2, in a first step 11 at least one data quantity B is generated based on the data contained in a database using a randomized response algorithm, after an analyst has executed a query over the database.

Therein, for each data element contained in the database a coin can be flipped, wherein the coin can have more than two sides. If the coin comes up head, what can for example be regarded as an indication that the truth is said, the corresponding data element A is not regarded further. Otherwise, if the coin comes up with another side, the corresponding data element b1,b2,...,bn is regarded as input for an exponential mechanism, wherein a quality score is assigned to the corresponding data element b1,b2,...,bn that corresponds to the frequency of the corresponding element in the database.

In a next step 12, the exponential mechanism is executed and a corresponding probability is estimated for each of the inputs for the exponential mechanism b1,b2,... ,bn. Thus, the final output is created from the elements contained in the at least one data quantity.

According to the first embodiment, the probability is first calculated for the element with the highest quality score, and thereafter respectively for the remaining element that has the highest quality score. Therein, the exponential mechanisms can also be configured to take elements into account as optimal candidates whose quality scores are less than a given sensitivity apart from each other.

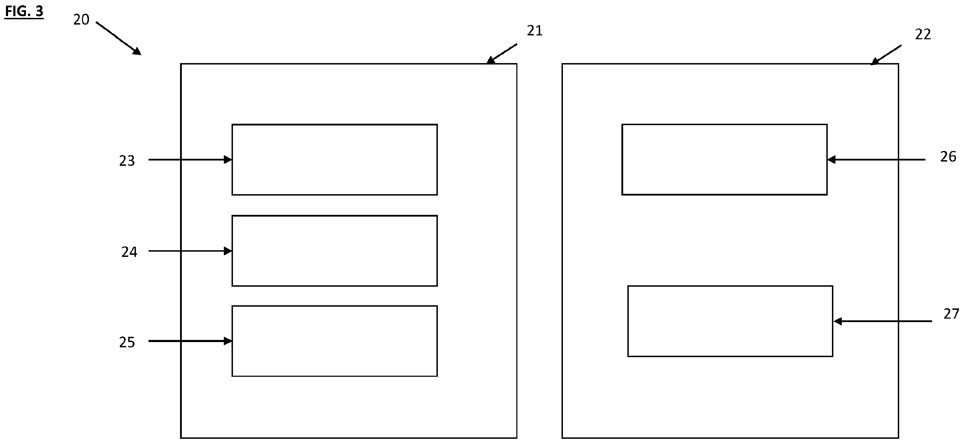

Fig. 3 illustrates a system 20 for developing a function according to embodiments of the invention.

As shown in Fig.3 , the system 20 for developing a function according to embodiments of the invention comprises a control unit for generating an output in response to a query on a database containing data pertaining to a plurality of privacy principles 21 and a control unit for developing a function 22, wherein the control unit for developing a function 22 is configured to develop the function based on an output generated by the control unit for generating an output in response to a query on a database containing data pertaining to a plurality of privacy principles 21.

Therein, the shown control unit for generating an output in response to a query on a database containing data pertaining to a plurality of privacy principles 21 comprises a first generating unit 23, wherein the first generating unit 23 is configured to generate at least one data quantity based on the data contained in the database using a randomized response algorithm, and a second generating unit 24, wherein the second generating unit 24 is configured to generate the output based on the at least one data quantity using a differential privacy mechanism that is based on a quality function.

Therein, the first generating unit and the second generating unit can for example be respectively realized by code that is stored in a memory and executable by a processor.

The quality function can again be based on at least one characteristic of the at least one data quantity. Therein, according to the embodiments of Fig. 3, the control unit for generating an output in response to a query on a database containing data pertaining to a plurality of privacy principles 21 further comprises a third generating unit 25 that is configured to respectively generate a quality score for all data elements contained in the database that form inputs for the differential privacy mechanism that is based on a quality function, respectively for all data elements contained in the at least one data quantity.

The third generating unit can again for example be realized by code that is stored in a memory and executable by a processor.

Further, according to the embodiments of Fig. 3, the third generating unit 25 is established separate from the first generating unit 23 and the second generating unit 24. However, the third generating unit can for example also be integrated in the second generating unit.

Further, according to the embodiments of Fig. 3, the differential privacy mechanism that is based on a quality function is the exponential mechanism.

Furthermore, the data elements contained in the database are sensor data.

As further shown in Fig. 3, the control unit for developing a function 22 comprises a receiving unit 26 for receiving an output generated by the control unit for generating an output in response to a query on a database containing data pertaining to a plurality of privacy principles 21 and a developing unit 27 that is configured to develop the function based on the received generated output.

Therein, the receiving unit can be a receiver that is configured to receive the generated output and the developing unit can again for example be realized by code that is stored in a memory and executable by a processor.

According to the embodiments of Fig. 3 the function is an advanced driver assistance system.

### Reference Signs

- 1: method
- 2: step
- 3: step
- 4: step
- 10: method
- 11: step
- 12: step
- 20: system
- 21: control unit
- 22: control unit
- 23: first generating unit
- 24: second generating unit
- 25: third generating unit
- 26: receiving unit
- 27: developing unit

## Claims

1. Method for generating an output in response to a query on a database containing data pertaining to a plurality of privacy principles, wherein the method (10) comprises the steps of:
- generating at least one quantity of data based on the data contained in the database using a randomized response algorithm (2,11); and
- generating the output based on the at least one quantity of data using a differential privacy algorithm that is based on a quality function (3,12).

2. Method according to claim 1, wherein the quality function is based on at least one characteristic of the at least one data quantity.

3. Method according to claim 1 or 2, wherein the differential privacy algorithm is an exponential mechanism.

4. Method according to any of claims 1 to 3, wherein the data contained in the database is sensor data.

5. Method (1) for developing a function, wherein the method (1) comprises the steps of:
- Generating an output using a method for generating an output in response to a query on a database containing data pertaining to a plurality of privacy principles according to one of claims 1 to 4; and
- Developing the function based on the generated output (4).

6. Method (1) according to claim 5, wherein the function is an advanced driver assistance system.

7. Control unit (21) for generating an output in response to a query on a database containing data pertaining to a plurality of privacy principles, wherein the control unit (21) comprises a first generating unit (23), wherein the first generating unit (23) is configured to generate at least one data quantity based on the data contained in the database using a randomized response algorithm, and a second generating unit (24), wherein the second generating unit (24) is configured to generate the output based on the at least one data quantity using a differential privacy algorithm that is based on a quality function.

8. Control unit (21) according to claim 7, wherein the quality function is based on at least one characteristic of the at least one data quantity.

9. Control unit (21) according to claim 7 or 8, wherein the differential privacy algorithm is an exponential mechanism.

10. Control unit (21) according to one of claims 7 to 9, wherein the data contained in the database is sensor data.

11. Control unit (22) for developing a function, wherein the control unit (22) comprises a receiving unit (26) for receiving an output, wherein the output is generated using a control unit for generating an output in response to a query on a database containing data pertaining to a plurality of privacy principles according to one of claims 7 to 10, and a developing unit (27), wherein the developing unit (27) is configured to develop the function based on the received output.

12. Control unit (22) according to claim 11, wherein the function is an advanced driver assistance system.
